# EUROPÄISCHE PATENTSCHRIFT

(11) **EP 1 724 111 B1**
(45) Veröffentlichungstag und Bekanntmachung des Hinweises auf die Patenterteilung: **03.12.2008**
(21) Anmeldenummer: 06009311.9
(22) Anmeldetag: 05.05.2006
(51) Int. Cl.: B32B 37/22, B32B 38/18, B32B 39/00

(54) **Bürogerät**
Office laminator
dispositif de bureau à laminer

(30) Priorität: 13.05.2005 DE 202005007860 U
(43) Veröffentlichungstag der Anmeldung: 22.11.2006
(73) Patentinhaber: Purple Cows GmbH, 45127 Essen (DE)
(72) Erfinder: Loibl, Bernd, 79771 Klettgau (DE)
(74) Vertreter: Paul, Dieter-Alfred

(56) Entgegenhaltungen:
- EP-A2- 0 314 036
- DE-A1- 3 737 946
- GB-A- 1 429 434
- US-A- 5 788 796
- US-A1- 2003 010 170
- US-A1- 2004 050 500
- US-B1- 6 602 376
- US-B1- 6 675 855

## Beschreibung

Die Erfindung betrifft ein Bürogerät für die Bearbeitung von Blattgut wie Papier und/oder Folien mit einer Auflageplatte zur Abstützung des Blattgutes beim Bearbeitungsvorgang sowie mit zumindest einer der Auflageplatte zugeordneten Schneideinrichtung und mit wenigstens einer Laminiereinrichtung zur Laminierung von Blattgut mit zumindest einer Folie.

Als Schneidgeräte ausgebildete Bürogeräte dienen der Beschneidung von Blattgut wie Papier, Folien oder Fotos. Im Stand der Technik sind sie als reine Schneidgeräte ausgebildet und weisen eine Auflageplatte auf, auf der das zu beschneidende Blattgut für den Schneidvorgang aufgelegt werden kann. An einem Rand der Auflageplatte ist eine Schneideinrichtung, meist in Form einer Hebelschneideinrichtung, angeordnet. Um Fotos genauer und sauberer beschneiden zu können, sind Schneidgeräte bekannt, die statt einer Hebelschneideinrichtung eine Rollenschneideinrichtung aufweisen, bei der ein drehbar gelagertes Scheibenmesser an einem auf einer Führungsschiene verfahrbaren Messerwagen gelagert ist. Bei dem Schneidgerät gemäß der EP 1 475 201 A1 sind Hebelschneideinrichtungen und Rollenschneideinrichtungen miteinander kombiniert, entweder durch Anordnung an zwei parallelen Seiten der Auflageplatte oder durch auswechselbare Zuordnung an einer Seite der Auflageplatte.

Daneben sind Laminiergeräte bekannt, um Schriftstücke, beispielsweise Prospektblätter, Urkunden, Ausweise etc., zwischen zwei durchsichtigen Kunststoffolien einzuschweißen, um sie vor Verschmutzung und Beschädigung zu schützen. Für den Laminiervorgang kann das Blattgut zwischen zwei lose Folien gelegt werden. Statt dessen können die beiden Folien aber auch in Form einer Laminiertasche vorliegen, bei der die beiden Laminierfolien an bis zu drei Seitenkanten miteinander verschweißt sind. In die Laminiertasche kann das zu laminierende Blattgut eingelegt werden. Die Laminierfolien sind transparent, damit das Blattgut sichtbar und lesbar bleibt. Sie behalten diese Transparenz auch nach dem Verschweißen bei. Hierzu sind die Laminierfolien gewöhnlich als sogenannte Verbundfolien ausgebildet (vgl. Ullmanns Enzyklopädie der Technischen Chemie, 4. Auflage, Band 11, 1976, Seite 684 und Band 14, 1977, Seite 249).

Die für den Laminiervorgang verwendeten Laminiergeräte weisen ein Gehäuse mit einer Frontseite und einer Rückseite auf. Zwischen Front- und Rückseite erstreckt sich ein flacher Durchlaufkanal, der auf der Frontseite eine Zuführöffnung und auf der Rückseite eine Austrittsöffnung für die Kombination aus Blattgut und Folien hat. Innerhalb des Gehäuses ist eine Laminiereinrichtung angeordnet, die gewöhnlich aus zwei beheizten Laminierwalzen besteht, die in Förderrichtung angetrieben sind und zwischen denen die Kombination aus Blattgut und Folien hindurchläuft. Dabei üben die Laminierwalzen Druck auf die durchlaufende Kombination aus und erhitzen gleichzeitig die Folien. Auf diese Weise verkleben die Folien mit dem einzuschweißenden Blattgut sowie an den Rändern untereinander. Die Laminierwalzen sorgen dafür, daß die Kombination aus Blattgut und Folien durch das Laminiergerät zur Austrittsöffnung transportiert wird.

Statt thermisch arbeitender Laminiergeräte sind auch einfache Laminiergeräte bekannt, die keiner elektrischen Stromzuführung bedürfen und bei denen die Verbindung von Blattgut und Folien allein durch Druckausübung bewirkt wird. Hierzu sind die Folien auf den dem Blattgut zugewandten Seiten mit einem druckempfindlichen Haftkleber versehen, der nicht selbstklebend ist, also erst durch Druckausübung aktiviert wird. Die Kombination aus Blattgut und Folien wird zwischen den Laminierwalzen zusammengepreßt. Der Antrieb der Laminierwalzen erfolgt von Hand.

Darüber hinaus sind Laminiergeräte mit einem Durchlaufkanal bekannt, an dessen Austrittsöffnung einen Rollenschneideinrichtung angeordnet ist, mittels der die zuvor laminierte Kombination aus Blattgut und Folie quer zur Durchlaufrichtung beschnitten werden kann (vgl. US 2004/0050500 Al). Ein solches Laminiergerät ist auch aus der US 2003/0010170 A1 bekannt, wobei bei diesem Laminiergerät zusätzlich die Möglichkeit besteht, die Rollenschneideinrichtung dergestalt zu trennen, dass eine Auflageplatte für das Blattgut gebildet wird. Auf diese Weise besteht die Möglichkeit, einen Beschnitt von Blattgut separat von dem Laminiergerät vorzunehmen.

In der GB 1 429 434 A ist ein Laminiergerät öffenbart, das eine Auflageplatte für die Auflage von Blattgut und Folie hat, wobei längs der Auflageplatte eine Schiene vorgesehen ist, an der eine sich quer dazu erstreckende Andruckrolle verschieblich gelagert ist. Auf diese Weise kann die Andruckrolle über die Auflageplatte gerollt und hierdurch eine Laminierung der mit einem druckempfindlichen Haftkleber versehenden Folie mit dem zu laminierenden Blattgut vorgenommen werden. An der die Laminierrolle führenden Schiene ist zudem ein Messerwagen gelagert, über den ein Randbeschnitt der Kombination aus Folie und Blattgut vorgenommen werden kann.

Der Erfindung liegt die Aufgabe zugrunde, ein Bürogerät der eingangs genannten Art fortzuentwickeln.

Diese Aufgabe wird erfindungsgemäß dadurch gelöst, dass die zumindest eine Schneideinrichtung an einer Seite der Auflageplatte und die Laminiereinrichtung an einer anderen Seite der Auflageplatte angeordnet sind. Grundgedanke der Erfindung ist es also, zwei - oder mehr - Einrichtungen mit unterschiedlichen Funktionen zu einem kombinierten Bürogerät zusammenzufassen. Durch diese Zusammenfassung werden erhebliche Vorteile erzielt. So ist der Platzbedarf des erfindungsgemäßen Bürogeräts wesentlich geringer. Auch bei der Handhabung ergeben sich durch die zusammenliegende Anordnung von Schneideinrichtung und Laminiereinrichtung Vorteile. Die Beschneidung eines Blattguts zwecks Vorbereitung eines anschließenden Laminiervorgangs kann ohne Ortswechsel durchgeführt werden, was praktisch ist und Zeit spart.

Die Zuführöffnung der Laminiereinrichtung für das Einführen von Blattgut und Folie(n) sollte der Auflageplatte zugewandt sein, und zwar insbesondere derart, daß die Unterseite der Zuführöffnung bündig mit der Oberseite der Auflageplatte liegt. Auf diese Weise kommt der Auflageplatte eine Doppelfunktion zu, da sie ihre Unterstützungsfunktion sowohl beim Schneidvorgang als auch bei der Zuführung der Kombination von Blattgut und Folie ausüben kann. Hierdurch entsteht ein besonders geringer Raumbedarf.

Es ist zweckmäßig, wenn die Laminiereinrichtung an einer Seite der Auflageplatte angeordnet oder anbringbar ist, die quer zu der Seite verläuft, an der die zumindest eine Schneideinrichtung angeordnet oder anbringbar ist.

Die Schneideinrichtung kann als Hebelschneideinrichtung ausgebildet sein, die einen schwenkbar gelagerten Messerarm mit daran gehaltener Schneide und ein ortsfest an der Auflageplatte gehaltenes Gegenmesser aufweist. Alternativ dazu kann die Schneideinrichtung auch als Rollenschneideinrichtung ausgebildet sein, die einen auf einer Führungsschiene verfahrbaren Messerwagen und ein darin drehbar gelagertes Scheibenmesser aufweist. In einer besonders bevorzugten Ausführungsform können beide Alternativen aber auch an dem Bürogerät miteinander kombiniert sein, beispielsweise in der Art, daß die Hebelschneideinrichtung an einer Seite der Unterlage und die Rollenschneideinrichtung an einer anderen Seite der Unterlage angeordnet oder anbringbar sind, und zwar zweckmäßigerweise so, daß die Schneideinrichtungen parallel zueinander verlaufen und die Laminiereinrichtung zwischen ihnen an einer quer dazu verlaufenden Seite angeordnet oder anbringbar ist.

Besonders zweckmäßig ist es, wenn die Schneideinrichtung(en) und/oder die Laminiereinrichtung lösbar an der Auflageplatte angebracht ist bzw. sind, wobei zusätzlich vorgesehen sein kann, daß die Schneideinrichtung(en) untereinander und/oder mit der Laminiereinrichtung austauschbar ausgebildet ist bzw. sind. Hierzu können die Auflageplatte einerseits sowie Schneideinrichtung(en) und/oder Laminiereinrichtung andererseits komplementäre Halteelemente aufweisen, über die sie an einer Seite der Unterlage anbringbar oder angebracht ist bzw. sind.

Die verwendeten Halteelemente können Rasteinrichtungen aufweisen, die zweckmäßigerweise derart ausgebildet sind, daß sie beim Anbringen der Schneideinrichtung(en) bzw. Laminiereinrichtung selbsteinrastend sind, jedoch bei Abnahme eine Freigabebetätigung der Rasteinrichtung erfordern.

Die Laminiereinrichtung kann als Heißlaminiereinrichtung ausgebildet sein, um ein Verschweißen von Blattgut und thermisch zu aktivierenden Folien zu ermöglichen. Dies erfordert jedoch einen elektrischen Anschluß für die Heizeinrichtung, der zusätzlich dazu genutzt werden kann, die Laminierwalzen motorisch anzutreiben. Ohne elektrischen Anschluß kommt man aus, wenn die Laminiereinrichtung als Kaltlaminiereinrichtung ausgebildet ist, bei der die Laminierwalzen von Hand, beispielsweise über einen Drehgriff, antreibbar sind. Es versteht sich, daß Kaltlaminiereinrichtungen auch einen elektrischen Antrieb für die Laminierwalzen haben können. Umgekehrt können Heißlaminiereinrichtungen aber auch einen handbetätigbaren Walzenantrieb haben.

Nach der Erfindung ist ferner vorgesehen, daß unterhalb der Auflageplatte wenigstens ein Ablagefach vorgesehen ist, und zwar vorzugsweise in horizontalem Abstand zu der zumindest einen Schneideinrichtung. Hierdurch wird die Möglichkeit eröffnet, den bisher bei Schneidgeräten nicht genutzten Raum unterhalb der Auflageplatte als Ablagefach zu nutzen. In diesem Ablagefach lassen sich Bürogeräte wie Enthefter, Hefter oder dergleichen, aber auch andere Büromaterialien wie Heftklammern, Schreibgeräte oder Blattgut wie Papier oder Folien ohne zusätzlichen Platzbedarf unterbringen. Hierdurch sind die Voraussetzungen geschaffen, daß die vor oder nach einem Schneid- und/oder Laminiervorgang anfallenden Vorgänge zeitnah und ohne Verzögerung durchgeführt werden können und daß der Platz um das Bürogerät frei bleibt für die eigentliche Büroarbeit.

Das Ablagefach ist zweckmäßigerweise dadurch öffenbar, daß die Auflageplatte zumindest teilweise von dem Bereich des Ablagefachs entfernbar ist, beispielsweise durch zumindest teilweises Hochklappen oder seitliches Verschieben. Für die Lagerung von gegen Lufteinfluß empfindliche Materialien, beispielsweise Fotopapiere, kann vorgesehen sein, daß das zumindest eine Ablagefach oder ein Teil davon luftdicht abgedichtet ist. Dies kann beispielsweise dadurch geschehen, daß das Ablagefach eine luftdichte, jedoch öffenbare Box enthält oder daraus besteht.

Die Erfindung sieht des weiteren vor, daß das Ablagefach in Teilfächer aufgeteilt ist, um verschiedene Gegenstände getrennt voneinander und damit geordnet aufzubewahren. Des weiteren ist vorgeschlagen, daß die Auflageplatte im Bereich des Ablagefachs zumindest durchsichtig ist. Auf diese Weise kann mit einem Blick erfaßt werden, ob das gewünschte Büromaterial tatsächlich in dem Ablagefach vorhanden ist.

Die Größe des Ablagefachs sollte den Raum unter der Auflageplatte möglichst gut nutzen. Es empfiehlt sich deshalb, zumindest 50 % der Auflageplatte für das darunter liegende Ablagefach bereitzustellen, da der Raum unterhalb der Auflageplatte gewöhnlich leer ist und der Platz für die Aufnahme von Büromaterialien nicht groß genug sein kann. Insbesondere sollte das Ablagefach auch so groß sein, daß dort für den Laminiervorgang vorgesehenes Blattgut, insbesondere die dafür erforderlichen Folien, gelagert werden können.

Nach der Erfindung ist schließlich vorgesehen, daß das Bürogerät mit einer eigenen Stromversorgung in Form einer Batterie oder eines Akkumulators versehen ist, um z.B. die Laminiereinrichtung mit elektrischem Strom zu versorgen.

In der Zeichnung ist die Erfindung an Hand von Ausführungsbeispielen näher veranschaulicht. Es zeigen:
- Figur 1: eine perspektivische Ansicht eines ersten Bürogeräts mit Hebelschneideinrichtung und Heißlaminiereinrichtung;
- Figur 2: eine perspektivische Ansicht des ersten Bürogerätes mit geöffnetem Ablagefach;
- Figur 3: eine perspektivische Ansicht eines zweiten Bürogerätes mit Hebelschneideinrichtung und Kaltlaminiereinrichtung;
- Figur 4: eine perspektivische Ansicht eines dritten Bürogerätes mit Hebel- und Rollenschneideinrichtung sowie mit anbringbaren Laminiereinrichtungen;
- Figur 5: eine perspektivische Ansicht eines vierten Bürogerätes mit auswechselbaren Laminierund Schneideinrichtungen.

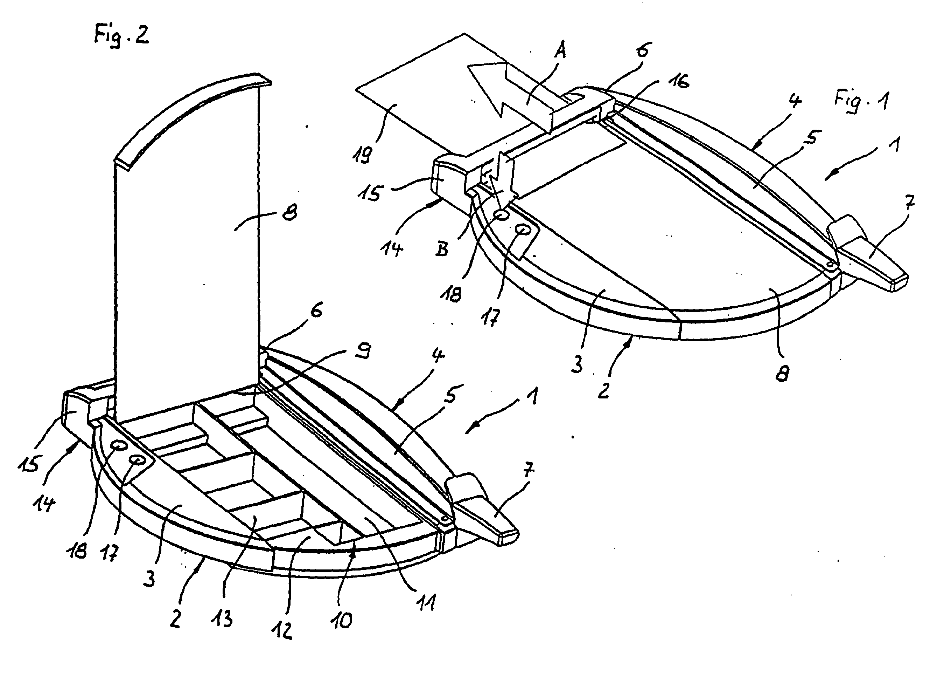

Das in den Figuren 1 und 2 dargestellte Bürogerät 1 weist eine Rahmenplatte 2 auf, deren horizontale Oberseite eine Auflageplatte 3 für die Auflage von Blattgut bildet. An der oberen Seite der Rahmenplatte 2 befindet sich eine Hebelschneideinrichtung 4.

Die Hebelschneideinrichtung 4 weist einen Messerarm 5 auf, der in einem Lager 6 um eine horizontale und quer zur dortigen Längsseite verlaufenden Achse verschwenkbar gelagert ist. Der Messerarm 5 ist an seiner Unterseite im wesentlichen über seine gesamte Länge mit einem Schneidmesser versehen, das in dieser Ansicht verdeckt ist. Am freien Ende des Messerarms 5 ist ein Handgriff 7 ausgebildet, über den der Messerarm 5 um das Lager 6 nach oben und nach unten verschwenkt werden kann. In der gezeigten Stellung befindet sich der Messerarm 5 in der unteren Endstellung.

Der größere Teil der Auflageplatte 3 ist vom übrigen Teil abgetrennt und bildet eine Abdeckplatte 8. Sie ist an einer Seite über ein Scharnier 9 nach oben um eine Achse verschwenkbar gelagert, die parallel zur Achse des Lagers 6 für den Messerarm 5 verläuft. Die Abdeckplatte 8 kann deshalb aus der in Figur 1 dargestellten geschlossenen Stellung in die in Figur 2 gezeigte, etwa senkrechte Stellung verschwenkt werden. Unterhalb der Abdeckplatte 8 befindet sich ein Ablagefach 10, das als untenseitig einen Boden 11 aufweisende, nach oben hin offene und in die Rahmenplatte 2 eingehängte, herausnehmbare Ablageschale 12 ausgebildet ist. Die Ablageschale 12 ist durch senkrechte Stege - beispielhaft mit 13 bezeichnet - so aufgeteilt, daß das Ablagefach 10 mehrere, voneinander getrennte Teilfächer aufweist. In diesen Teilfächern können Büromaterialien oder kleine Bürogeräte untergebracht werden. Oberhalb der Teilfächer und unterhalb der Abdeckplatte 8 kann auch Blattgut abgelegt werden.

An der Seite der Rahmenplatte 2, die benachbart zum Lager 6 quer zu der Seite verläuft, an der die Hebelschneideinrichtung 4 angeordnet ist, ist eine Heißlaminiereinrichtung 14 angebracht. Sie hat ein Gehäuse 15, das in der Richtung des Pfeils A von einem Durchlaufkanal geringer Höhe durchsetzt ist. Der Durchlaufkanal hat auf der der Auflageplatte 3 zugewandten Seite eine Zuführöffnung 16 und auf der dazu abgewandten Seite eine Austrittsöffnung.

In dem Gehäuse 15 sind übereinander zwei hier nicht sichtbare Laminierwalzen angeordnet, die zwischen sich einen Laminierspalt ausbilden, der sich über die Breite des Durchlaufkanals erstreckt. Die Laminierwalzen sind beheizt und gegenläufig derart angetrieben, daß ihre Walzenmäntel sich im Walzenspalt in Richtung auf die Austrittsöffnung bewegen.

Das Bürogerät 1 weist Bedienknöpfe 17, 18 auf, über die die Heißlaminiereinrichtung 14 an- und abgeschaltet werden kann. Über den einen Bedienknopf 17 wird die Beheizung der Laminierwalzen gesteuert, während beim Drücken des anderen Bedienknopfes 18 in Richtung des Pfeils B der Antrieb der Laminierwalzen eingeschaltet und nach dem Laminiervorgang auch wieder ausgeschaltet wird.

Für einen Schneidvorgang werden das zu beschneidende Blattgut auf die Auflageplatte 3 aufgelegt und der Messerarm 5 um das Lager 6 nach oben geschwenkt. Das Blattgut wird dann so weit verschoben, daß der abzuschneidende Abschnitt an der Seite, an der die Hebelschneideinrichtung 4 angebracht ist, über die Auflageplatte 3 hinausragt. Dann wird der Messerarm 5 um das Lager 6 nach unten in die gezeigte Stellung verschwenkt.

Für einen Laminiervorgang wird eine Kombination 19 aus zu laminierendem Blattgut und Laminierfolien auf die Auflageplatte 3 aufgelegt und in die Zuführöffnung 16 so weit eingeschoben, bis die Laminierwalzen die Blattgut-Folien-Kombination 19 erfassen. Die Laminierwalzen transportieren dann diese Kombination 19 durch die Heißlaminiereinrichtung 14 in Richtung des Pfeils A. Im Laminierspalt zwischen den beiden Laminierwalzen wird die Kombination 19 verpreßt und gleichzeitig so weit erhitzt, daß eine Verbindung zwischen Folien und Blattgut, an den Rändern auch eine Verbindung der Folien untereinander, bewirkt wird.

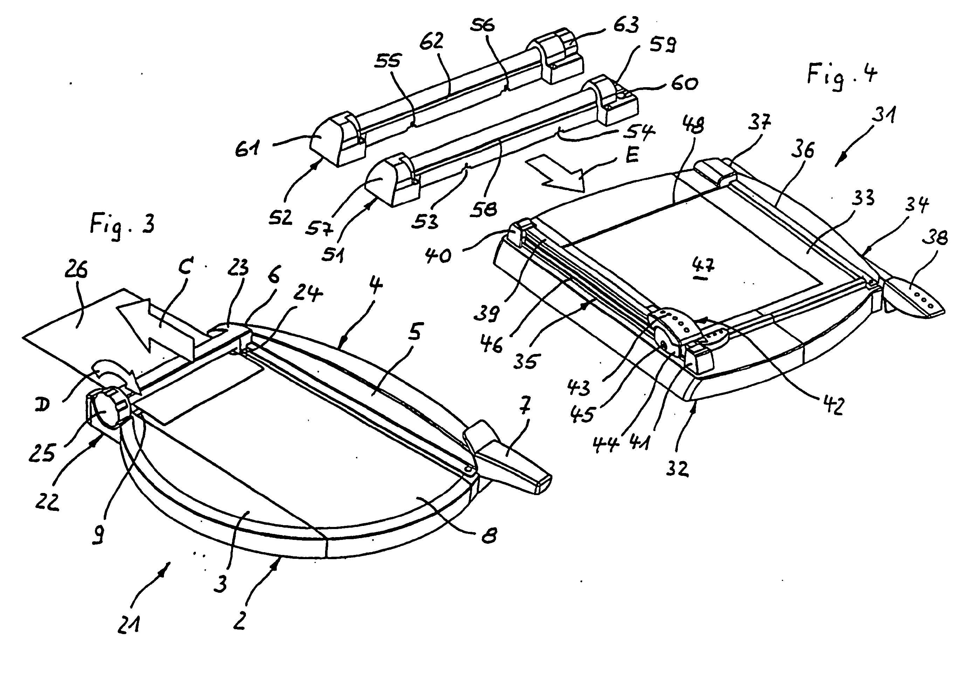

Das in Figur 3 dargestellte Bürogerät 21 weist eine Kaltlaminiereinrichtung 22 auf. Alle anderen Teile des Bürogerätes 21 stimmen mit den entsprechenden Teilen des Bürogerätes 1 gemäß den Figuren 1 und 2 überein, so daß für dieses Teile in Figur 2 dieselben Bezugsziffern verwendet worden sind und zur Beschreibung dieser Teile auf die vorstehende Beschreibung des Bürogerätes 1 gemäß den Figuren 1 und 2 Bezug genommen wird.

Die Kaltlaminiereinrichtung 22 ist an derselben Stelle angeordnet wie die Heißlaminiereinrichtung 11 bei dem Bürogerät 1 gemäß den Figuren 1 und 2. Sie weist ein Gehäuse 23 auf, das von einem sich in Richtung des Pfeils C erstreckenden Durchlaufkanal geringer Höhe durchsetzt ist. Der Durchlaufkanal hat auf der der Auflageplatte 3 zugewandten Seite eine Zuführöffnung 24 und auf der dazu abgewandten Seite eine Austrittsöffnung.

Innerhalb des Gehäuses 23 sind auch hier zwei übereinander angeordnete Laminierwalzen vorgesehen, deren Achsen sich parallel zu der des Lagers 6 erstrecken. Die Laminierwalzen bilden zwischen sich einen Laminierspalt aus, der sich über die Breite des Durchlaufkanals erstreckt. Die obere Laminierwalze ist mit einem von außen zugänglichen Drehknopf 25 verbunden. Die untere Laminierwalze ist mit der oberen über ein Stirnradgetriebe so gekoppelt, daß sich die beiden Laminierwalzen in entgegengesetzte Richtungen drehen.

Ein Schneidvorgang läuft wie zu dem Bürogerät 1 beschrieben ab. Ähnliches gilt auch für den Laminiervorgang. Hierzu wird eine Kombination 26 aus zu laminierenden Blattgut und beidseitigen aufgelegten Folien auf die Auflageplatte 3 aufgelegt und in die Zuführöffnung 24 in Richtung des Pfeils C so weit eingeschoben, bis das vordere Ende der Kombination 26 in den Laminierspalt gelangt. Dann wird der Drehknopf 25 in Richtung des Pfeils D von Hand gedreht. Hierdurch werden die Laminierwalzen in entgegengesetzter Richtung so angetrieben, daß die Blattgut-Folien-Kombination 26 in Richtung des Pfeils C durch die Kaltlaminiereinrichtung 22 transportiert wird. Dabei wird die Kombination 26 so stark verpreßt, daß Blattgut und Folien miteinander verkleben.

Das in Figur 4 dargestellte Bürogerät 31 weist ein im wesentlichen rechteckigen Grundriß aufweisende Rahmenplatte 32 auf, deren horizontale Oberseite eine Auflageplatte 33 für die Auflage von Blattgut bildet. An der oberen Längsseite ist eine Hebelschneideinrichtung 34 und an der unteren Längsseite ist eine Rollenschneideinrichtung 35 angeordnet. Beide Schneideinrichtungen 34, 35 verlaufen parallel zueinander.

Die Hebelschneideinrichtung 34 weist einen Messerarm 36 auf, der in einem Lager 37 um eine horizontale und quer zur dortigen Längsseite verlaufende Achse schwenkbar gelagert ist. Der Messerarm 36 ist im wesentlichen über seine gesamte Länge an seiner Unterseite mit einem Schneidmesser versehen, das in dieser Ansicht verdeckt ist. Am freien Ende des Messerarms 36 ist ein Handgriff 38 ausgebildet, über den der Messerarm 36 nach oben und nach unten verschwenkt werden kann. In der gezeigten Stellung befindet sich der Messerarm 36 in der unteren Endstellung.

Die Rollenschneideinrichtung 35 weist eine Führungsschiene 39 auf, die sich im Abstand zur Auflageplatte 33 parallel zur Schneidkante bzw. Schneidrichtung der Hebelschneideinrichtung 34 zwischen zwei Halteblöcken 40, 41 erstreckt. Auf der Führungsschiene 39 ist ein Messerwagen 42 in Richtung der Längsachse der Führungsschiene 39 verschieblich geführt. Er kann von Hand über den Handgriff 43 hin- und hergeschoben werden.

An dem Messerwagen 42 ist ein Scheibenmesser drehbar gelagert, das hier nicht sichtbar ist, weil es durch eine Schutzkappe 44 abgedeckt ist. Die Lagerung erfolgt um eine horizontale Achse 45, die sich quer zur Längsachse der Führungsschiene 39 erstreckt. Das Scheibenmesser steht nach unten über den Messerwagen 42 vor und liegt auf einer Gegenmesserschiene 46 auf, die in die Auflageplatte 33 eingelassen ist und sich parallel zur Führungsschiene 39 erstreckt.

Ein Teil der Auflageplatte 3 ist von deren übrigem Teil getrennt und bildet eine Abdeckplatte 47. Die Abdeckplatte 47 ist über ein Scharnier 48 mit dem übrigen Teil der Auflageplatte 33 verbunden und kann um dieses Scharnier 48 aus der gezeigten horizontalen und bündig mit dem übrigen Teil der Auflageplatte 33 befindlichen Stellung nach oben geklappt werden, ähnlich wie bei dem Bürogerät 1 (vgl. Figur 2). Unterhalb der Abdeckplatte 47 befindet sich - wie bei den Bürogeräten 1, 21 gemäß den Figuren 1 bis 3 - ein Ablagefach, das schalenförmig ausgebildet ist und untenseitig durch einen Boden begrenzt wird. Das Ablagefach ist nach oben hin offen und wird durch die Abdeckplatte 47 abgeschlossen. Diese ist durchsichtig gestaltet, so daß der Inhalt des Ablagefachs von außen erkennbar ist.

Das Ablagefach ist so groß, daß auch Papier eingelegt werden kann. Es besteht darüber hinaus die Möglichkeit, in das Ablagefach eine luftdichte Box einzulegen und darin gegen Lufteinfluß empfindliche Gegenstände, wie z.B. Fotopapiere, geschützt einzulegen. Statt dessen kann zwischen Abdeckplatte 47 und Rahmenplatte 32 eine umlaufende Dichtung vorgesehen sein, über die ein luftdichter Abschluß erzielbar ist.

Zu dem Bürogerät 31 gehört eine der beiden Laminiereinrichtungen 51, 52. Jeweils eine der beiden Laminiereinrichtungen 51, 52 können an der Seite der Rahmenplatte 32, auf die der Pfeil E gerichtet ist, mit dieser abnehmbar verbunden werden. Hierzu sind an der Rahmenplatte 32 und an den Laminiereinrichtungen 51, 52 komplementäre Rasteinrichtungen 53, 54, 55, 56 vorgesehen, die in ineinander gestecktem Zustand miteinander verrasten. Durch eine Entrastung kann die jeweils mit der Rahmenplatte 32 verbundene Laminiereinrichtung 51 bzw. 52 wieder abgenommen werden.

Die der Rahmenplatte 32 benachbart dargestellte Heißlaminiereinrichtung 51 hat ein Gehäuse 57, das in Richtung des Pfeils A von einem Durchlaufkanal geringer Höhe durchsetzt ist. Der Durchlaufkanal hat auf der der Auflageplatte 33 zugewandten Seite eine Zuführöffnung 58 und auf der dazu abgewandten Seite eine Austrittsöffnung. In dem Gehäuse 57 ist die Heißlaminiereinrichtung 51 genauso ausgebildet wie die Heißlaminiereinrichtung 13 bei dem Bürogerät 1 gemäß den Figuren 1 und 2, so daß auf deren Beschreibung Bezug genommen wird.

Die Heißlaminiereinrichtung 51 weist Bedienknöpfe 59, 60 auf, über die die Heißlaminiereinrichtung 51 an- und abgeschaltet werden kann. Über den Bedienknopf 59 wird die Beheizung der Laminierwalzen gesteuert, während beim Drücken des anderen Bedienknopfes 60 der Antrieb der Laminierwalzen eingeschaltet und nach dem Laminiervorgang auch wieder ausgeschaltet wird.

Die der Rahmenplatte 32 entfernt liegende Kaltlaminiereinrichtung 52 entspricht der Kaltlaminiereinrichtung 22 bei dem Bürogerät 21 gemäß Figur 3. Sie hat ein Gehäuse 61, das von einem sich in Richtung des Pfeils E erstreckenden Durchlaufkanal geringer Höhe durchsetzt ist. Der Durchlaufkanal hat auf der der Auflageplatte 33 zugewandten Seite eine Zuführöffnung 62 und auf der dazu abgewandten Seite eine Austrittsöffnung. Innerhalb des Gehäuses 61 ist die Laminiereinrichtung 52 identisch mit der Laminiereinrichtung 22 bei dem Bürogerät 21 gemäß Figur 3, so daß auf die dortige Beschreibung Bezug genommen wird. Die obere Laminierwalze ist mit einem von außen zugänglichen Drehknopf 63 verbunden, so daß die Kaltlaminiereinrichtung 52 von Hand angetrieben wird.

Das Beschneiden von Blattgut wie auch das Laminieren geschieht in analoger Weise, wie zu den in den Figuren 1 bis 3 dargestellten Bürogeräten 11, 21 beschrieben.

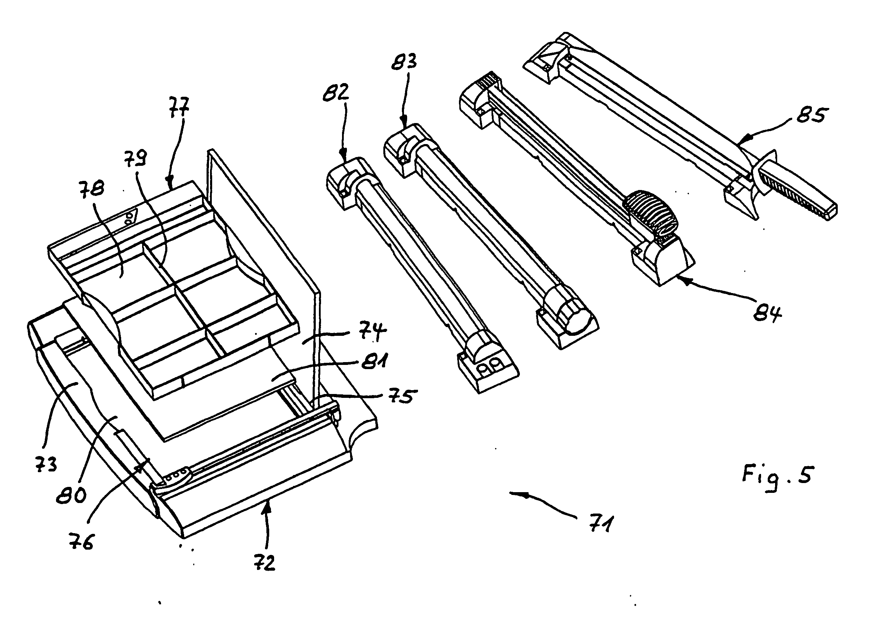

Das in Figur 5 dargestellte Bürogerät 71 weist eine im wesentlichen rechteckige Rahmenplatte 72 auf, deren horizontale Oberseite eine Auflageplatte 73 für die Auflage von Blattgut bildet. Der größere Teil der Auflageplatte 73 ist vom übrigen Teil abgetrennt und bildet eine Abdeckplatte 74. Sie ist an einer Seite über ein Scharnier 75 verschwenkbar gelagert, so daß sie aus einer horizontalen Stellung, in der die Abdeckplatte 74 bündig mit der Auflageplatte 73 liegt, in die gezeigte, im wesentlichen senkrechte Stellung verschwenkbar ist.

Unterhalb der Abdeckplatte 74 befindet sich ein Ablagefach 76, das als eine in die Rahmenplatte 72 eingehängte, - hier herausgehoben dargestellte - nach oben hin offene Ablageschale 77 ausgebildet ist. Die Ablageschale 77 hat einen Boden 78 und ist durch senkrechte, von dem Boden 78 hochstehende Stege - beispielhaft mit 79 bezeichnet - so aufgeteilt, daß das Ablagefach 76 mehrere, voneinander getrennte Teilfächer aufweist. In diesen Teilfächern können Büromaterialien oder kleine Bürogeräte untergebracht werden. Unterhalb der Ablageschale 77 weist die Rahmenplatte 72 einen Rahmenboden 80 auf. Wenn die Ablageschale 77 in die Rahmenplatte 72 eingehängt ist, verbleibt zwischen dem Boden 78 der Ablageschale 77 und dem Rahmenboden 80 ein Abstand. Der sich daraus ergebende Raum kann zur Unterbringung von Blattgut 81 genutzt werden.

Auf der dem Scharnier 75 benachbarten Seite der Rahmenplatte 72 können die dazu parallel dargestellten Einrichtung über komplementäre Rastelemente angebracht werden. Es sind dies eine Heißlaminiereinrichtung 82 - sie entspricht der Heißlaminiereinrichtung 51 bei dem Bürogerät 31 gemäß Figur 4 -, eine Kaltlaminiereinrichtung 83 - sie entspricht der Kaltlaminiereinrichtung 52 bei dem Bürogerät 31 gemäß Figur 4 -, eine Rollenschneideinrichtung 84 - sie entspricht der Rollenschneideinrichtung 35 bei dem Bürogerät 31 gemäß Figur 4 - und eine Hebelschneideinrichtung 85 - sie entspricht der Hebelschneideinrichtung 34 bei dem Bürogerät 31 gemäß Figur 4. Die Rollenschneideinrichtung 84 und die Hebelschneideinrichtung 86 unterscheiden sich von der Rollenschneideinrichtung 35 bzw. Hebelschneideinrichtung 34 bei dem Bürogerät 31 gemäß Figur 4 lediglich dadurch, daß sie mit der Rahmenplatte 72 keine Einheit bilden, sondern von dieser abnehmbar sind bzw. an diese über die genannten Rastelemente anbringbar sind, und zwar jeweils alternativ. Auf diese Weise kann das Bürogerät 71 mit einer der Laminiereinrichtungen 82, 83 oder mit der Rollenschneideinrichtung 84 oder mit der Hebelschneideinrichtung 85 verbunden werden.

Es versteht sich, daß auch an den anderen Seiten der Rahmenplatte 72 komplementäre Rastelemente vorgesehen sein können, so daß das Bürogerät 71 in beliebiger Weise mit einer der Laminiereinrichtungen 82, 83 und der Rollenschneideinrichtung 84 und der Hebelschneideinrichtung 85 kombiniert werden kann, so daß sich die in Figur 4 dargestellte Kombination ergibt. Statt dessen kann jedoch auch eine der Laminiereinrichtungen 82, 83 mit einer der Schneideinrichtungen 84, 85 kombiniert werden, so daß sich die in den Figuren 1 bis 3 gezeigten Kombinationen ergeben.

## Patentansprüche

1. Bürogerät (1, 21, 31, 71) für die Bearbeitung von Blattgut wie Papier und/oder Folien mit einer Auflageplatte (3, 33, 73) zur Abstützung des Blattgutes beim Bearbeitungsvorgang sowie mit zumindest einer der Auflageplatte (3, 33, 73) zugeordneten Schneideinrichtung (4, 34, 35, 84, 85) und mit wenigstens einer Laminiereinrichtung (14, 22, 51, 52, 82, 83) zur Laminierung von Blattgut mit zumindest einer Folie, **dadurch gekennzeichnet, daß** die zumindest eine Schneideinrichtung (4, 34, 35) an einer Seite der Auflageplatte (3, 33) und die Laminiereinrichtung (14, 22, 51, 52) an einer anderen Seite der Auflageplatte (3, 33) angeordnet sind.

2. Bürogerät nach Anspruch 1, **dadurch gekennzeichnet, daß** die Laminiereinrichtung (14, 22, 51, 52, 82, 83) eine Zuführöffnung (13, 24, 58, 62) für das Einführen von Blattgut und Folie(n) aufweist, die der Auflageplatte (3, 33, 73) zugewandt ist.

3. Laminiergerät nach Anspruch 2, **dadurch gekennzeichnet, daß** die Unterseite der Zuführöffnung (13, 24, 58, 62) bündig mit der Oberseite der Auflageplatte (3, 33, 73) liegt.

4. Bürogerät nach einem der Ansprüche 1 bis 3, **dadurch gekennzeichnet, daß** die Laminiereinrichtung (14, 22, 51, 52) an einer Seite der Auflageplatte (3, 33) angeordnet oder anbringbar ist, die quer zu der Seite verläuft, an der die zumindest eine Schneideinrichtung (4, 34, 35) angeordnet oder anbringbar ist.

5. Bürogerät nach einem der Ansprüche 1 bis 4, **dadurch gekennzeichnet, daß** die Schneideinrichtung als Hebelschneideinrichtung (4) ausgebildet ist, die einen schwenkbar gelagerten Messerarm (5) mit daran gehaltener Schneide und ein ortsfest an der Auflageplatte (3) gehaltenes Gegenmesser aufweist.

6. Bürogerät nach einem der Ansprüche 1 bis 5, **dadurch gekennzeichnet, daß** die Schneideinrichtung als Rollenschneideinrichtung ausgebildet ist, die einen auf einer Führungsschiene verfahrbaren Messerwagen und ein darin drehbar gelagertes Scheibenmesser aufweist.

7. Bürogerät nach Anspruch 5 und 6, **dadurch gekennzeichnet, daß** das Bürogerät (31, 71) sowohl eine Hebelschneideinrichtung (34, 85) als auch eine Rollenschneideinrichtung (35, 84) aufweist.

8. Bürogerät nach Anspruch 7, **dadurch gekennzeichnet, daß** die Hebelschneideinrichtung (34) an einer Seite der Auflageplatte (33) und die Rollenschneideinrichtung (35) an einer anderen Seite der Auflageplatte (33) angeordnet oder anbringbar sind.

9. Bürogerät nach Anspruch 6 oder 7, **dadurch gekennzeichnet, daß** die Hebelschneideinrichtung (34) und die Rollenschneideinrichtung (35) so angeordnet oder anbringbar sind, daß sie parallel verlaufene Schneidrichtungen haben.

10. Bürogerät nach einem der Ansprüche 1 bis 9, **dadurch gekennzeichnet, daß** die Schneideinrichtung(en) (84, 85) lösbar an der Auflageplatte (73) anbringbar bzw. angebracht ist bzw. sind.

11. Bürogerät nach einem der Ansprüche 1 bis 10, **dadurch gekennzeichnet, daß** die Laminiereinrichtung (51, 52, 82, 83) lösbar an der Auflageplatte (3) anbringbar bzw. angebracht ist.

12. Bürogerät nach Anspruch 10 und 11, **dadurch gekennzeichnet, daß** die Schneideinrichtungen (84, 85) untereinander und/oder mit der Laminiereinrichtung (51, 52, 82, 83) austauschbar sind.

13. Bürogerät nach einem der Ansprüche 10 bis 12, **dadurch gekennzeichnet, daß** die Auflageplatte (33, 73) einerseits sowie Schneideinrichtung(en) (84, 85) und/oder die Laminiereinrichtung (51, 52, 82, 83) andererseits komplementäre Halteelemente (53 bis 56) aufweisen, über die sie an einer Seite der Auflageplatte (33, 73) anbringbar oder angebracht ist.

14. Bürogerät nach Anspruch 13, **dadurch gekennzeichnet, daß** die Halteelemente (53 bis 56) Rasteinrichtungen aufweisen.

15. Bürogerät nach Anspruch 14, **dadurch gekennzeichnet, daß** die Rasteinrichtungen derart ausgebildet sind, daß sie beim Anbringen von Schneideinrichtung(en) (84, 85) bzw. Laminiereinrichtung (51, 52, 82, 83) selbsteinrastend sind, jedoch bei Abnahme eine Freigabebetätigung der Rasteinrichtung erfordern.

16. Bürogerät nach einem der Ansprüche 1 bis 15, **dadurch gekennzeichnet, daß** die Laminiereinrichtung als Heißlaminiereinrichtung (13, 51, 82) ausgebildet ist.

17. Bürogerät nach einem der Ansprüche 1 bis 15, **dadurch gekennzeichnet, daß** die Laminiereinrichtung als Kaltlaminiereinrichtung (22, 52, 83) ausgebildet ist.

18. Bürogerät nach Anspruch 17, **dadurch gekennzeichnet, daß** die Laminiereinrichtung (21) Laminierwalzen aufweist, die von Hand antreibbar sind.

19. Bürogerät nach einem der Ansprüche 1 bis 18, **dadurch gekennzeichnet, daß** unterhalb der Auflageplatte (3, 33, 73) wenigstens ein Ablagefach (10, 76) vorgesehen ist.

20. Bürogerät nach Anspruch 19, **dadurch gekennzeichnet, daß** das Ablagefach (10, 76) in horizontalem Abstand zu der zumindest einen Schneideinrichtung (4, 34, 35, 84, 85) vorgesehen ist.

21. Bürogerät nach Anspruch 19 oder 20, **dadurch gekennzeichnet, daß** das zumindest eine Ablagefach (10, 76) dadurch öffenbar ist, daß die Auflageplatte (3, 33, 73) teilweise in dem Bereich des zumindest einen Ablagefachs (10, 76) entfernbar ist.

22. Bürogerät nach Anspruch 21, **dadurch gekennzeichnet, daß** wenigstens ein Teil der Auflageplatte (3, 33, 73) wenigstens teilweise hochklappbar oder seitlich verschiebbar ist.

23. Bürogerät nach einem der Ansprüche 19 bis 22, **dadurch gekennzeichnet, daß** das zumindest eine Ablagefach (10, 76) oder ein Teil davon in geschlossenem Zustand luftdicht abgedichtet ist.

24. Bürogerät nach Anspruch 23, **dadurch gekennzeichnet, daß** das zumindest eine Ablagefach (10, 76) eine luftdichte, jedoch öffenbare Box enthält oder daraus besteht.

25. Bürogerät nach einem der Ansprüche 19 bis 24, **dadurch gekennzeichnet, daß** das zumindest eine Ablagefach (10, 76) in Teilfächer aufgeteilt ist.

26. Bürogerät nach einem der Ansprüche 19 bis 25, **dadurch gekennzeichnet, daß** die Auflageplatte (3, 33, 73) im Bereich des zumindest einen Ablagefachs (10, 76) wenigstens bereichsweise durchsichtig ist.

27. Bürogerät nach einem der Ansprüche 19 bis 26, **dadurch gekennzeichnet, daß** das zumindest eine Ablagefach (10, 76) mindestens 50 % der Fläche der Auflageplatte (3, 33, 73) einnimmt.

28. Bürogerät nach einem der Ansprüche 1 bis 27, **dadurch gekennzeichnet, daß** das Bürogerät mit einer Batterie oder einem Akkumulator als Energiequelle für die Laminiereinrichtung versehen ist.

## Claims

1. An office accessory (1, 21, 31, 71) for processing sheet material such as paper and/or films, having a support plate (3, 33, 73) to support the sheet material during the processing operation and having at least one cutting device (4, 34, 35, 84, 85) associated with the support plate (3, 33, 73), and at least one laminating device (14, 22, 51, 52, 82, 83) for laminating sheet material to at least one film, **characterized in that** the at least one cutting device (4, 34, 35) is arranged on one side of the support plate (3, 33), and the laminating device (14, 22, 51, 52) on a different side of the support plate (3, 33).

2. The office accessory according to Claim 1, **characterized in that** the laminating device (14, 22, 51, 52, 82, 83) comprises an insertion opening (13, 24, 58, 62), facing toward the support plate (3, 33, 73), for the introduction of sheet material and film(s).

3. The office accessory according to Claim 2, **characterized in that** the lower side of the insertion opening (13, 24, 58, 62) is flush with the upper side of the support plate (3, 33, 73).

4. The office accessory according to one of Claims 1 through 3, **characterized in that** the laminating device (14, 22, 51, 52) is arranged or attachable on a side of the support plate (3, 33) that extends transversely to the side on which the at least one cutting device (4, 34, 35) is arranged or attachable.

5. The office accessory according to one of Claims 1 through 4, **characterized in that** the cutting device is embodied as a guillotine cutting device (4) that comprises a pivotably mounted knife arm (5) having a blade held thereon and a counterknife held in stationary fashion on the support plate (3).

6. The office accessory according to one of Claims 1 through 5, **characterized in that** the cutting device is embodied as a rotary cutting device that comprises a knife carriage displaceable on a guide bar and a circular knife rotatably mounted **in that** carriage.

7. The office accessory according to Claims 5 and 6, **characterized in that** the office accessory (31, 71) comprises both a guillotine cutting device (34, 85) and a rotary cutting device (35, 84).

8. The office accessory according to Claim 7, **characterized in that** the guillotine cutting device (34) is arranged or attachable on one side of the support plate (33), and the rotary cutting device (35) on a different side of the support plate (33).

9. The office accessory according to Claim 6 or 7, **characterized in that** the guillotine cutting device (34) and the rotary cutting device (35) are arranged or attachable so that they have cutting directions extending parallel to one another.

10. The office accessory according to one of Claims 1 through 9, **characterized in that** the cutting device(s) (84, 85) is or are attachable or attached detachably on the support plate (73).

11. The office accessory according to one of Claims 1 through 10, **characterized in that** the laminating device (51, 52, 82, 83) is attachable or attached detachably on the support plate (3).

12. The office accessory according to Claims 10 and 11, **characterized in that** the cutting devices (84, 85) are embodied interchangeably with one another and/or with the laminating device (51, 52, 82, 83).

13. The office accessory according to one of Claims 10 through 12, **characterized in that** the support plate (33, 73) on the one hand and the cutting device(s) (84, 85) and/or laminating device (51, 52, 82, 83) on the other hand comprise complementary retaining elements (53-56) with which it is attachable or attached on one side of the support plate (33, 73).

14. The office accessory according to Claim 13, **characterized in that** the retaining elements (53-56) comprise latch devices.

15. The office accessory according to Claim 14, **characterized in that** the latch devices are embodied in such a way that they are self-latching upon attachment of the cutting device(s) (84, 85) or laminating device (51, 52, 82, 83), but require a release actuation of the latch device upon removal.

16. The office accessory according to one of Claims 1 through 15, **characterized in that** the laminating device is embodied as a hot laminating device (13, 51, 82).

17. The office accessory according to one of Claims 1 through 15, **characterized in that** the laminating device is embodied as a cold laminating device (22, 52, 83).

18. The office accessory according to Claim 17, **characterized in that** the laminating device (21) comprises laminating rollers that are drivable manually.

19. The office accessory according to one of Claims 1 through 18, **characterized in that** at least one storage compartment (10, 76) is provided beneath the support plate (3, 33, 73).

20. The office accessory according to Claim 19, **characterized in that** the storage compartment (10, 76) is provided at a horizontal spacing from the at least one cutting device (4, 34, 35, 84, 85).

21. The office accessory according to Claim 19 or 20, **characterized in that** the at least one storage compartment (10, 76) is openable by the fact that the support plate (3, 33, 73) is at least partly removable in the region of the storage compartment (10, 76).

22. The office accessory according to Claim 21, **characterized in that** at least a portion of the support plate (3, 33, 73) can be at least partly swung up or displaced laterally.

23. The office accessory according to one of Claims 19 through 22, **characterized in that** the at least one storage compartment (10, 76), or a portion thereof, is sealed in airtight fashion when closed.

24. The office accessory according to Claim 23, **characterized in that** the at least one storage compartment (10, 76) contains or comprises an airtight but openable box.

25. The office accessory according to one of Claims 19 through 24, **characterized in that** the at least one storage compartment (10, 76) is subdivided into sub-compartments.

26. The office accessory according to one of Claims 19 through 25, **characterized in that** the support plate (3, 33, 73) is at least locally transparent in the region of the at least one storage compartment (10, 76).

27. The office accessory according to one of Claims 19 through 26, **characterized in that** the at least one storage compartment (10, 76) occupies at least 50% of the area of the support plate (3, 33, 73).

28. The office accessory according to one of Claims 1 through 27, **characterized in that** the office accessory is equipped with a battery or rechargeable battery as an energy source for the laminating device.

## Revendications

1. Appareil de bureau (1, 21, 31, 71) pour le traitement de matériaux en feuilles, tels que du papier et/ou des feuils, comprenant une platine d'appui (3, 33, 73) destinée à soutenir le matériau en feuilles au cours du processus de traitement, ainsi qu'au moins un dispositif de sectionnement (4, 34, 35, 84, 85) associé à ladite platine d'appui (3, 33, 73), et au moins un dispositif de contreplacage (14, 22, 51, 52, 82, 83) destiné à contreplaquer un matériau en feuilles avec au moins un feuil, **caractérisé par le fait que** le dispositif de sectionnement (4, 34, 35), prévu au minimum, se trouve d'un côté de la platine d'appui (3, 33) et le dispositif de contreplacage (14, 22, 51, 52) est situé sur un autre côté de ladite platine d'appui (3, 33).

2. Appareil de bureau selon la revendication 1, **caractérisé par le fait que** le dispositif de contreplacage (14, 22, 51, 52, 82, 83) présente un orifice d'amenée (13, 23, 58, 62) affecté à l'introduction de matériaux en feuilles et d'un (de) feuil(s), et tourné vers la platine d'appui (3, 33, 73).

3. Appareil de bureau selon la revendication 2, **caractérisé par le fait que** la face inférieure de l'orifice d'amenée (13, 24, 58, 62) se trouve dans l'affleurement de la face supérieure de la platine d'appui (3, 33, 73).

4. Appareil de bureau selon l'une des revendications 1 à 3, **caractérisé par le fait que** le dispositif de contreplacage (14, 22, 51, 52) est situé ou peut être installé sur un côté de la platine d'appui (3, 33) qui s'étend transversalement par rapport au côté sur lequel le dispositif de sectionnement (4, 34, 35), prévu au minimum, est situé ou peut être installé.

5. Appareil de bureau selon l'une des revendications 1 à 4, **caractérisé par le fait que** le dispositif de sectionnement est réalisé sous la forme d'un massicot (4) comportant un bras (5) porte-lame monté à pivotement, sur lequel un tranchant est retenu, et une contre-lame maintenue fixe sur la platine d'appui (3).

6. Appareil de bureau selon l'une des revendications 1 à 5, **caractérisé par le fait que** le dispositif de sectionnement est réalisé sous la forme d'un dispositif sectionneur à rouleaux comportant un chariot porte-lame mobile sur une glissière de guidage, et une lame discoïdale montée à rotation sur ledit chariot.

7. Appareil de bureau selon les revendications 5 et 6, **caractérisé par le fait que** ledit appareil de bureau (31, 71) est équipé, à la fois, d'un massicot (34, 85) et d'un dispositif sectionneur à rouleaux (35, 84).

8. Appareil de bureau selon la revendication 7, **caractérisé par le fait que** le massicot (34) est situé ou peut être installé sur un côté de la platine d'appui (33), et le dispositif sectionneur à rouleaux (35) est situé ou peut être installé sur un autre côté de ladite platine d'appui (33).

9. Appareil de bureau selon la revendication 6 ou 7, **caractérisé par le fait que** le massicot (34) et le dispositif sectionneur à rouleaux (35) sont situés, ou peuvent être installés de manière à présenter des directions de sectionnement s'étendant parallèlement.

10. Appareil de bureau selon l'une des revendications 1 à 9, **caractérisé par le fait que** le (les) dispositif(s) sectionneur(s) (84, 85) peut (peuvent) être ou est (sont), respectivement, installé(s) de manière amovible sur la platine d'appui (73).

11. Appareil de bureau selon l'une des revendications 1 à 10, **caractérisé par le fait que** le dispositif de contreplacage (51, 52, 82, 83) peut être ou est, respectivement, installé de manière amovible sur la platine d'appui (3).

12. Appareil de bureau selon les revendications 10 et 11, **caractérisé par le fait que** les dispositifs sectionneurs (84, 85) sont interchangeables entre eux et/ou avec le dispositif de contreplacage (51, 52, 82, 83).

13. Appareil de bureau selon l'une des revendications 10 à 12, **caractérisé par le fait que** la platine d'appui (33, 73), d'une part, ainsi que le ou les dispositif(s) sectionneur(s) (84, 85) et/ou le dispositif de contreplacage (51, 52, 82, 83), d'autre part, offrent des éléments complémentaires de retenue (53 à 56) par l'intermédiaire desquels ils peuvent être ou sont installés d'un côté de ladite platine d'appui (33, 73).

14. Appareil de bureau selon la revendication 13, **caractérisé par le fait que** les éléments de retenue (53 à 56) comportent des systèmes de crantage.

15. Appareil de bureau selon la revendication 14, **caractérisé par le fait que** les systèmes de crantage sont réalisés de telle sorte qu'ils s'encliquettent d'eux-mêmes lors de la mise en place respective d'un ou de dispositif(s) sectionneur(s) (84, 85) ou du dispositif de contreplacage (51, 52, 82, 83), mais réclament toutefois, lors de la dépose, une manoeuvre de neutralisation du système de crantage.

16. Appareil de bureau selon l'une des revendications 1 à 15, **caractérisé par le fait que** le dispositif de contreplacage est réalisé sous la forme d'un dispositif de contreplacage à chaud (13, 51, 82).

17. Appareil de bureau selon l'une des revendications 1 à 15, **caractérisé par le fait que** le dispositif de contreplacage est réalisé sous la forme d'un dispositif de contreplacage à froid (22, 52, 83).

18. Appareil de bureau selon la revendication 17, **caractérisé par le fait que** le dispositif de contreplacage (21) comporte des cylindres de contreplacage pouvant être entraînés à la main.

19. Appareil de bureau selon l'une des revendications 1 à 18, **caractérisé par le fait qu'**au moins un casier récepteur (10, 76) est prévu au-dessous de la platine d'appui (3, 33, 73).

20. Appareil de bureau selon la revendication 19, **caractérisé par le fait que** le casier récepteur (10, 76) est agencé à distance horizontale du dispositif sectionneur (4, 34, 35, 84, 85) prévu au minimum.

21. Appareil de bureau selon la revendication 19 ou 20, **caractérisé par le fait que** le casier récepteur (10, 76), prévu au minimum, peut être ouvert par enlèvement partiel de la platine d'appui (3, 33, 73) dans la région dudit casier récepteur (10, 76) prévu au minimum.

22. Appareil de bureau selon la revendication 21, **caractérisé par le fait qu'**au moins une partie de la platine d'appui (3, 33, 73) peut être animée, au moins partiellement, d'un pivotement vers le haut ou d'un coulissement latéral.

23. Appareil de bureau selon l'une des revendications 19 à 22, **caractérisé par le fait que** le casier récepteur (10, 76) prévu au minimum, ou une partie de ce dernier, est rendu(e) étanche à l'air à l'état fermé.

24. Appareil de bureau selon la revendication 23, **caractérisé par le fait que** le casier récepteur (10, 76), prévu au minimum, renferme un caisson étanche à l'air, mais pouvant cependant être ouvert, ou bien est constitué dudit caisson.

25. Appareil de bureau selon l'une des revendications 19 à 24, **caractérisé par le fait que** le casier récepteur (10, 76), prévu au minimum, est scindé en des casiers partiels.

26. Appareil de bureau selon l'une des revendications 19 à 25, **caractérisé par le fait que** la platine d'appui (3, 33, 73) est translucide, au moins par zones, dans la région du casier récepteur (10, 76) prévu au minimum.

27. Appareil de bureau selon l'une des revendications 19 à 26, **caractérisé par le fait que** le casier récepteur (10, 76), prévu au minimum, occupe au moins 50 % de la superficie de la platine d'appui (3, 33, 73).

28. Appareil de bureau selon l'une des revendications 1 à 27, **caractérisé par le fait que** ledit appareil de bureau est muni d'une batterie ou d'un accumulateur matérialisant une source d'énergie affectée au dispositif de contreplacage.
